# EUROPEAN PATENT APPLICATION

(11) **EP 3 892 519 A1**
(43) Date of publication of application: **13.10.2021**
(21) Application number: 19891726.2
(22) Date of filing: 16.10.2019
(51) Int. Cl.: B61L 25/02, G01B 11/00

(54) **RAILROAD MONITORING SYSTEM, RAILROAD MONITORING DEVICE, RAILROAD MONITORING METHOD, AND NON-TRANSITORY COMPUTER-READABLE MEDIUM**

(30) Priority: 03.12.2018 JP 2018226683
(71) Applicant: NEC Corporation, 108-8001 Tokyo (JP)
(72) Inventor: YODA, Yukihide, Tokyo 108-8001 (JP); AONO, Yoshiaki, Tokyo 108-8001 (JP)
(74) Representative: Vossius & Partner Patentanwälte Rechtsanwälte mbB
(86) International application number: PCT/JP2019/040698
(87) International publication number: WO 2020/116031

(57) **Abstract**

A railroad monitoring system according to the present disclosure includes a cable (20) including a communication optical fiber being laid on a railroad (10), a reception unit (331) configured to receive an optical signal from at least one communication optical fiber included in the cable (20), and a detection unit (332) configured to detect a pattern according to a state of the railroad (10), based on the optical signal, and detect an abnormal state of the railroad (10), based on the detected pattern according to the state of the railroad (10).

## Description

### Technical Field

The present disclosure relates to a railroad monitoring system, a railroad monitoring device, a railroad monitoring method, and a non-transitory computer-readable medium.

### Background Art

Abnormality detection of a railroad has been often performed manually. For example, an operator monitors occurrence of a landslide, entry of an animal, human, and the like to an expressway and the like, and the like through visual inspection. However, when abnormality detection of a railroad is performed manually, it takes a lot of cost and time, discovery and handling of an abnormality may be delayed.

Further, a traveling state of a train on a railroad has been performed by an axle counter laid on a railroad. However, there is a problem that an axle counter is reset due to an influence of a power failure, a break in contact, and the like.

Thus, a system for monitoring an abnormality in a railroad and a traveling state of a train on a railroad has been recently proposed (for example, PTLs 1 to 3).

In techniques described in PTLs 1 and 2, an optical fiber is laid along a railroad, and a train on the railroad is detected by performing a frequency analysis on scattered light in the optical fiber. At this time, a multiple loop is formed in a region in which a train is particularly desired to be detected in such a way as to surround the region, and detection sensitivity by an optical fiber is improved.

In a technique described in PTL 3, an optical fiber is laid along a railroad, and an abnormality (for example, a rockslide, a landslip, and the like) in a railroad and a traveling state of a train on a railroad are detected through an acoustic signal induced in the optical fiber.

### Citation List

### Patent Literature

[PTL 1] Japanese Patent Application Publication No. 2018-114790
[PTL 2] Japanese Patent Application Publication No. 2018-114792
[PTL 3] Japanese Unexamined Patent Application Publication (Translation of PCT Application) No. 2018-504603

### Summary of Invention

### Technical Problem

However, since the techniques described in PTLs 1 and 2 detect a train on a railroad, the techniques described in PTLs 1 to 2 are merely a technique for improving detection sensitivity by an optical fiber by forming a multiple loop in such a way as to surround a region in which a train is desired to be detected.

Further, the technique described in PTL 3 performs abnormality detection of a railroad by monitoring an acoustic signal when strong stress is applied to an optical fiber.

Therefore, there is a problem that, although an extreme state such as a rockslide and a landslip to a railroad can be detected, detection of a state that hardly affects stress to an optical fiber is difficult.

Meanwhile, in recent years, demand for also detecting various environmental changes and the like of a railroad has been increasing due to development of Internet of Things (IoT) and the like. However, there is a high possibility that an environmental change and the like of a railroad do not appear in a significant change in stress to an optical fiber.

Further, the technique described in PTL 3 performs detection of a traveling state of a train on a railroad by monitoring an acoustic signal. Thus, there is a problem that detection of a state where no train travels and a train stops is difficult.

Thus, an object of the present disclosure is to solve any of the problems described above, and provide a railroad monitoring system, a railroad monitoring device, a railroad monitoring method, and a non-transitory computer-readable medium capable of detecting either an abnormal state of a railroad or a traveling state of a train on a railroad with high accuracy.

### Solution to Problem

A railroad monitoring system according to one aspect includes:
a cable including a communication optical fiber, being laid on a railroad;
a reception unit configured to receive an optical signal from at least one communication optical fiber included in the cable; and
a detection unit configured to detect a pattern according to a state of the railroad, based on the optical signal, and detect an abnormal state of the railroad, based on the detected pattern according to the state of the railroad.

A railroad monitoring device according to one aspect includes:
a reception unit configured to receive an optical signal from at least one communication optical fiber included in a cable laid on a railroad; and
a detection unit configured to detect a pattern according to a state of the railroad, based on the optical signal, and detect an abnormal state of the railroad, based on the detected pattern according to the state of the railroad.

A railroad monitoring method according to one aspect is a railroad monitoring method by a railroad monitoring device, the method including:
receiving an optical signal from at least one communication optical fiber included in a cable laid on a railroad; and
detecting a pattern according to a state of the railroad, based on the optical signal, and detecting an abnormal state of the railroad, based on the detected pattern according to the state of the railroad.

A non-transitory computer-readable medium according to one aspect is a non-transitory computer-readable medium that stores a program for causing a computer to execute:
a procedure of receiving an optical signal from at least one communication optical fiber included in a cable laid on a railroad; and
a procedure of detecting a pattern according to a state of the railroad, based on the optical signal, and detecting an abnormal state of the railroad, based on the detected pattern according to the state of the railroad.

### Advantageous Effects of Invention

According to the aspect described above, an effect capable of detecting an abnormal state of a railroad with high accuracy can be acquired.

### Brief Description of Drawings

Fig. 1 is a diagram illustrating one example of a configuration of a railroad monitoring system according to an example embodiment.
Fig. 2 is a diagram illustrating one example of a configuration of the railroad monitoring system according to the example embodiment.
Fig. 3 is a diagram illustrating one example of a pattern according to a state of a railroad used in a method A1 in the railroad monitoring system according to the example embodiment.
Fig. 4 is a diagram illustrating one example of a pattern according to a state of the railroad used in the method A1 in the railroad monitoring system according to the example embodiment.
Fig. 5 is a diagram illustrating one example of machine training by a method A3 in the railroad monitoring system according to the example embodiment.
Fig. 6 is a diagram illustrating one example of abnormal level information according to the example embodiment.
Fig. 7 is a diagram illustrating one example of a pattern according to a traveling state of a train on the railroad used in a method B1 in the railroad monitoring system according to the example embodiment.
Fig. 8 is a diagram illustrating one example of a pattern according to a traveling state of a train on the railroad used in the method B1 in the railroad monitoring system according to the example embodiment.
Fig. 9 is a diagram illustrating one example of a pattern according to a traveling state of a train on the railroad used in the method B1 in the railroad monitoring system according to the example embodiment.
Fig. 10 is a diagram illustrating one example of a pattern according to a traveling state of a train on the railroad used in the method B1 in the railroad monitoring system according to the example embodiment.
Fig. 11 is a diagram illustrating one example of a pattern according to a traveling state of a train on the railroad used in the method B1 in the railroad monitoring system according to the example embodiment.
Fig. 12 is a diagram illustrating one example of machine training by a method B3 in the railroad monitoring system according to the example embodiment.
Fig. 13 is a diagram illustrating one example of a pattern according to a state of a train on the railroad used in a method C1 in the railroad monitoring system according to the example embodiment.
Fig. 14 is a diagram illustrating one example of a pattern according to a state of a train on the railroad used in the method C1 in the railroad monitoring system according to the example embodiment.
Fig. 15 is a diagram illustrating one example of a pattern according to a state of a train on a railroad used in a method C2 in the railroad monitoring system according to the example embodiment.
Fig. 16 is a diagram illustrating one example of train information according to the example embodiment.
Fig. 17 is a diagram illustrating one example of an application that can be achieved based on an abnormal state of a railroad and a train detected by a detection unit according to the example embodiment.
Fig. 18 is a block diagram illustrating one example of a hardware configuration of a computer that achieves the railroad monitoring device according to the example embodiment.
Fig. 19 is a flow diagram illustrating an operation flow of the railroad monitoring system according to the example embodiment.
Fig. 20 is a diagram illustrating one example of a railroad monitoring system according to another example embodiment.
Fig. 21 is a diagram illustrating another example of a railroad monitoring system according to another example embodiment.
Fig. 22 is a diagram illustrating one example of an arrangement of a fiber sensing unit in a railroad monitoring system according to another example embodiment.
Fig. 23 is a diagram illustrating another example of an arrangement of a fiber sensing unit in a railroad monitoring system according to another example embodiment.
Fig. 24 is a diagram illustrating still another example of an arrangement of a fiber sensing unit in a railroad monitoring system according to another example embodiment.
Fig. 25 is a diagram illustrating a still different example of an arrangement of a fiber sensing unit in a railroad monitoring system according to another example embodiment.
Fig. 26 is a diagram illustrating one example of an operation of the fiber sensing unit during disconnection of an optical fiber cable in the railroad monitoring system according in Fig. 22.
Fig. 27 is a diagram illustrating one example of an operation of the fiber sensing unit during disconnection of an optical fiber cable in the railroad monitoring system according in Fig. 23.
Fig. 28 is a diagram illustrating one example of an operation of the fiber sensing unit during disconnection of an optical fiber cable in the railroad monitoring system according in Fig. 25.

### Description of Embodiment

Example embodiments of the present disclosure will be described below with reference to the drawings.

### <Example Embodiment>

### <Configuration of Example Embodiment>

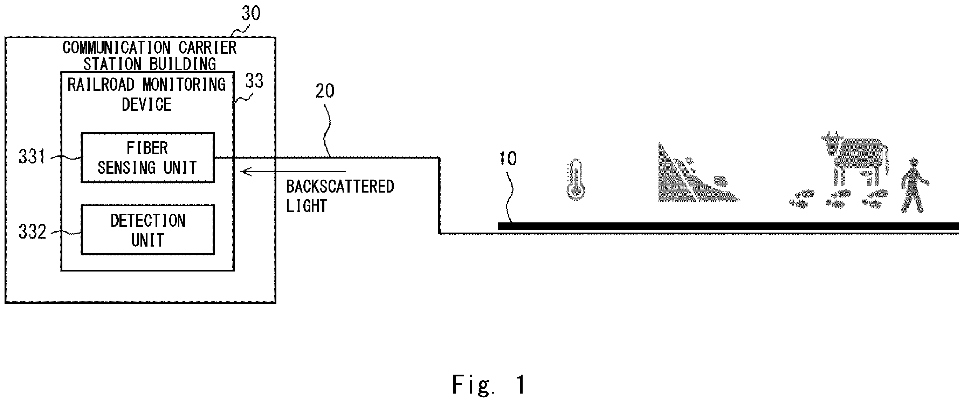

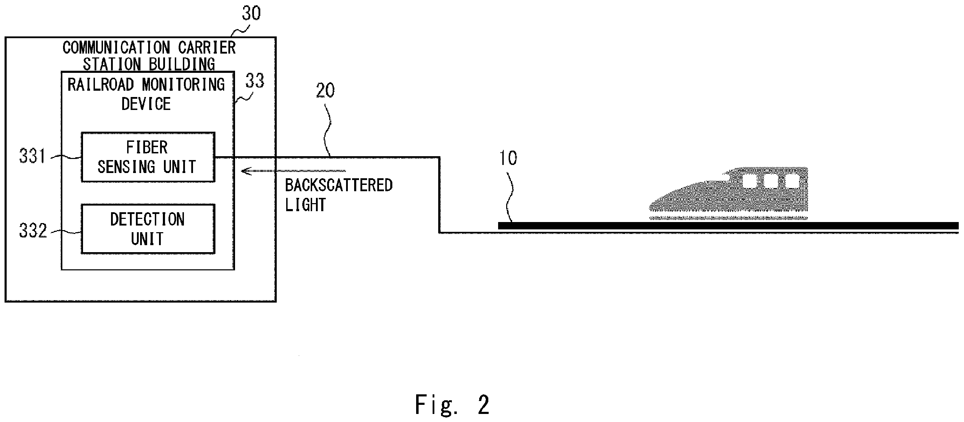

First, a configuration example of a railroad monitoring system according to the present example embodiment will be described with reference to Figs. 1 and 2.

As illustrated in Fig. 1, the railroad monitoring system according to the present example embodiment detects an abnormal state of a railroad 10, and includes an optical fiber cable 20 and a railroad monitoring device 33. Further, as illustrated in Fig. 2, the railroad monitoring system according to the present example embodiment also detects a traveling state of a train on the railroad 10.

The optical fiber cable 20 is laid along the railroad 10. In Fig. 1, the optical fiber cable 20 is laid under the railroad 10, which is not limited thereto, and the optical fiber cable 20 may be laid on the side and the like of the railroad 10. Further, at this time, for a location in which the railroad 10 is particularly desired to be detected, the optical fiber cable 20 may be closely installed in such a way that the optical fiber cable 20 is laid while forming a loop, for example. In this way, a detection rate of an abnormality in the railroad 10 can be improved, and detection accuracy of a traveling state of a train on the railroad 10 can also be improved.

The optical fiber cable 20 is a cable formed by covering one or more communication optical fibers, and has one end drawn into a communication carrier station building 30.

The railroad monitoring system according to the present example embodiment detects an abnormal state of the railroad 10 and a traveling state of a train on the railroad 10 by using an optical fiber sensing technique using an optical fiber as a sensor.

Specifically, pulse light is incident on a communication optical fiber included in the optical fiber cable 20 inside the communication carrier station building 30. Then, backscattered light occurs for each transmission distance due to transmission of the pulse light through the communication optical fiber in a direction of the railroad 10. The backscattered light returns into the communication carrier station building 30 via the same communication optical fiber.

Herein, the railroad 10 vibrates when a train travels, and a landslide and the like occur, and the vibration of the railroad 10 is transmitted to the communication optical fiber. Further, a temperature of the railroad 10 rises when a fire and the like occur, and a change in temperature of the railroad 10 is also transmitted to the communication optical fiber. Further, the railroad 10 generates an unusual sound when an abnormality in the railroad 10 and the like occur, and a change in sound is also transmitted to the communication optical fiber. Thus, in the communication optical fiber, a pattern in which vibration, temperature, and sound of the railroad 10 are transmitted varies according to a state (for example, presence or absence of occurrence of a landslide and a rockslide, presence or absence of entry of an animal, human, and the like, presence or absence of occurrence of a fire, presence or absence of occurrence of an earthquake, presence or absence of damage to the railroad 10 and a train, presence or absence of occurrence of an unusual sound, presence or absence of occurrence of a strong wind (for example, including a typhoon and a tornado), presence or absence of occurrence of flood damage, and the like) of the railroad 10, a traveling state (for example, a kind, a location, a speed, acceleration/deceleration, and the like) of a train on the railroad 10, and an abnormal state (for example, damage, deterioration, and the like) of a train on the railroad 10.

Thus, backscattered light retuning into the communication carrier station building 30 includes a pattern according to a state of the railroad 10, a pattern according to a traveling state of a train on the railroad 10, and a pattern according to a state of a train on the railroad 10. In the example in Fig. 1, backscattered light retuning into the communication carrier station building 30 includes a pattern according to a state of various locations on the railroad 10, a pattern according to a traveling state of a train on the railroad 10, and a pattern according to a state of a train on the railroad 10.

The railroad monitoring system according to the present example embodiment detects an abnormal state (for example, occurrence of a landslide and a rockslide, entry of an animal, human, and the like, occurrence of a fire, occurrence of an earthquake, damage to the railroad 10 and a train, occurrence of an unusual sound, occurrence of a strong wind, occurrence of flood damage, and the like) of the railroad 10 by using a pattern according to a state of the railroad 10 being included in backscattered light that returns into the communication carrier station building 30.

Furthermore, the railroad monitoring system according to the present example embodiment detects a traveling state (for example, a kind, a location, a speed, acceleration/deceleration, and the like) of a train on the railroad 10 by using a pattern according to a traveling state of a train on the railroad 10 being included in backscattered light that returns into the communication carrier station building 30.

Furthermore, the railroad monitoring system according to the present example embodiment detects an abnormal state (for example, damage, deterioration, and the like) of a train on the railroad 10 by using a pattern according to a state of a train on the railroad 10 being included in backscattered light that returns into the communication carrier station building 30.

Herein, the railroad monitoring device 33 described above is provided inside the communication carrier station building 30. The railroad monitoring device 33 is a facility newly installed for achieving the present example embodiment.

The railroad monitoring device 33 is a device including a function of detecting a state of the railroad 10 in addition to including a function as an optical fiber sensing apparatus. Specifically, the railroad monitoring device 33 includes a fiber sensing unit 331 and a detection unit 332. The fiber sensing unit 331 is one example of a reception unit.

The fiber sensing unit 331 causes pulse light to be incident on at least one communication optical fiber included in the optical fiber cable 20. The pulse light is transmitted in a direction of the railroad 10. Further, the fiber sensing unit 331 receives backscattered light for the pulse light from the same communication optical fiber as the communication optical fiber on which the pulse light is incident. The backscattered light is received from the direction of the railroad 10.

At this time, as described above, backscattered light received by the fiber sensing unit 331 includes a pattern according to a state of the railroad 10, a pattern according to a traveling state of a train on the railroad 10, and a pattern according to a state of a train on the railroad 10. Further, in the example in Fig. 1, the fiber sensing unit 331 receives, in time-series, backscattered light occurring in various locations on the railroad 10.

Thus, when the fiber sensing unit 331 receives backscattered light, the fiber sensing unit 331 first determines a location on the railroad 10 in which the backscattered light occurs. Furthermore, the fiber sensing unit 331 detects a state of vibration, a state of temperature, a state of sound, and the like in the determined location.

Moreover, the detection unit 332 detects a pattern according to a state in the determined location on the railroad 10, based on a processing result of the backscattered light by the fiber sensing unit 331, and detects an abnormal state in the determined location on the railroad 10, based on the detected pattern. Furthermore, the detection unit 332 detects a pattern according to a traveling state of a train on the railroad 10, based on a processing result of the backscattered light by the fiber sensing unit 331, and detects the traveling state of the train on the railroad 10, based on the detected pattern. Furthermore, the detection unit 332 detects a pattern according to a state of a train on the railroad 10, based on a processing result of the backscattered light by the fiber sensing unit 331, and detects an abnormal state of the train on the railroad 10, based on the detected pattern.

Thus, when the fiber sensing unit 331 receives backscattered light, a method of determining a location in which the backscattered light occurs will be first described below.

In the present example embodiment, the fiber sensing unit 331 determines an occurrence location in which backscattered light occurs, based on a time difference between time at which pulse light is incident on a communication optical fiber and time at which the backscattered light is received from the same communication optical fiber. At this time, the fiber sensing unit 331 determines an occurrence location closer to the fiber sensing unit 331 with a smaller time difference described above.

Next, a method of detecting an abnormal state of the railroad 10 in the detection unit 332 will be described below.

### (A1) Method A1

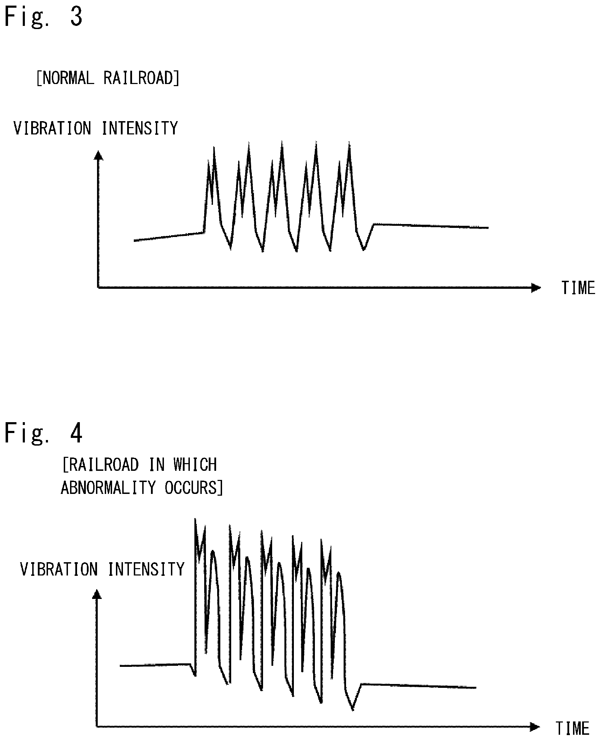

First, a method A1 of detecting an abnormal state of the railroad 10 will be described with reference to Figs. 3 and 4. Figs. 3 and 4 illustrate vibration data (a horizontal axis is time and a vertical axis is vibration intensity) of the railroad 10 when a train passes through a specific location on the railroad 10. Further, Fig. 3 illustrates vibration data of a normal railroad 10, and Fig. 4 illustrates vibration data of the railroad 10 in which an abnormality such as deterioration occurs due to a lapse of time.

The fiber sensing unit 331 performs processing of determining a location on the railroad 10 in which backscattered light received from a communication optical fiber occurs. Furthermore, the fiber sensing unit 331 performs processing of detecting a state of vibration, a state of temperature, a state of sound, and the like in the determined location on the railroad 10 by detecting the backscattered light by a distributed acoustic sensor, a distributed vibration sensor, a distributed temperature sensor, and the like.

Thus, the detection unit 332 detects a pattern according to a state of the railroad 10, based on a processing result of the backscattered light by the fiber sensing unit 331. At this time, the detection unit 332 can detect a dynamic fluctuation pattern of vibration by detecting a shift and the like of a fluctuation in strength of vibration, a vibration location, and the number of vibrations occurring in the railroad 10. Further, the detection unit 332 also detects a dynamic fluctuation pattern of sound and temperature occurring in the railroad 10, and thus the detection unit 332 can detect a complex unique pattern of the railroad 10 and detect a deterioration state with higher accuracy. Herein, specifically, vibration data of the railroad 10 are detected as illustrated in Figs. 3 and 4.

As illustrated in Figs. 3 and 4, vibration data of the railroad 10 are a dynamic vibration pattern varying according to an abnormal state of the railroad 10. Specifically, the vibration data (Fig. 4) of the railroad 10 in which an abnormality occurs have an amplitude of vibration intensity greater than that of the vibration data (Fig. 3) of the normal railroad 10.

Thus, when the detection unit 332 detects an abnormal state of the railroad 10, the detection unit 332 first detects vibration data (for example, Figs. 3 and 4) of the railroad 10. Next, the detection unit 332 detects an abnormal state of the railroad 10, based on an amplitude of vibration intensity in the vibration data of the railroad 10.

### (A2) Method A2

Next, a method A2 of detecting an abnormal state of the railroad 10 will be described.

In the present method A2, the detection unit 332 holds a correspondence table in which a pattern according to a state of the railroad 10 and the state of the railroad 10 are associated with each other. Thus, when the detection unit 332 detects an abnormal state of the railroad 10, the detection unit 332 first detects a pattern according to a state of the railroad 10. Next, the detection unit 332 determines whether the railroad 10 is in an abnormal state by determining a state of the railroad 10 associated with the pattern detected above according to the state of the railroad 10 by using the correspondence table described above.

### (A3) Method A3

Next, a method A3 of detecting an abnormal state of the railroad 10 will be described.

In the present method A3, the detection unit 332 performs machine training (for example, deep training and the like) on a pattern according to a state of the railroad 10, and detects an abnormal state of the railroad 10 by using a training result (initial training model) of the machine training.

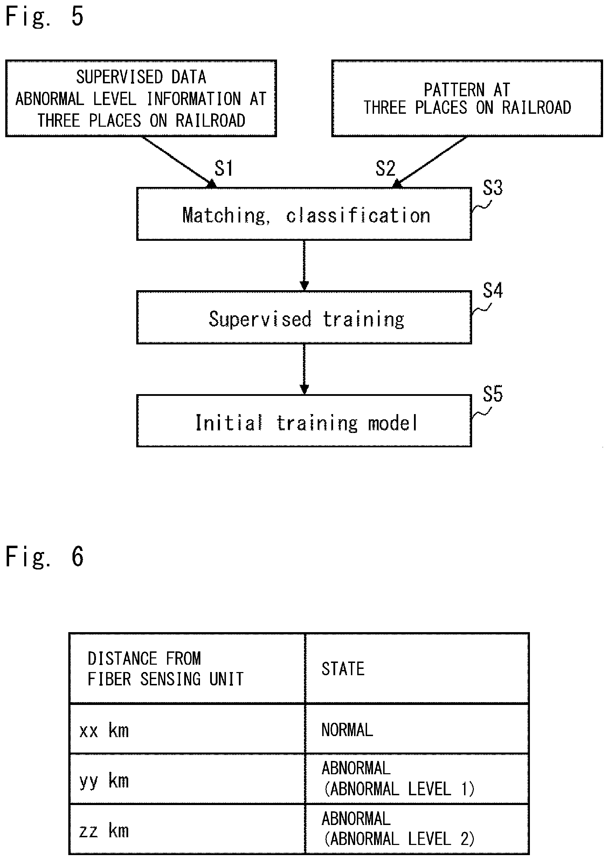

First, a method of machine training in the present method A3 will be described with reference to Fig. 5. Herein, a method of training, as supervised data, a pattern at three places having a distance from the fiber sensing unit 331 of xx [km], yy [km], and zz [km] on the railroad 10 will be described.

As illustrated in Fig. 5, the detection unit 332 inputs supervised data being abnormal level information indicating an abnormality degree at three places on the railroad 10, and a pattern according to a state of the three places (steps S1 and S2). Fig. 6 illustrates one example of abnormal level information being supervised data. Note that Fig. 6 illustrates that an abnormal degree further advances as an abnormal level has a greater numerical value. Further, the abnormal level information is held by the detection unit 332.

Next, the detection unit 332 performs matching and classification on both (step S3), and performs supervised training (step S4). In this way, an initial training model is acquired (step S5). The initial training model is a model from which a state of the railroad 10 is output when a pattern according to the state of the railroad 10 is input.

Next, a method of detecting an abnormal state of the railroad 10 in the present method A3 will be described.

When the detection unit 332 detects an abnormal state of the railroad 10, the detection unit 332 first detects a pattern according to a state of the railroad 10. Next, the detection unit 332 inputs the pattern to an initial training model. In this way, the detection unit 332 acquires a state of the railroad 10 as an output result of the initial training model, and thus the detection unit 332 determines whether the railroad 10 is in an abnormal state.

Next, a method of detecting a traveling state of a train on the railroad 10 in the detection unit 332 will be described below.

### (B1) Method B1

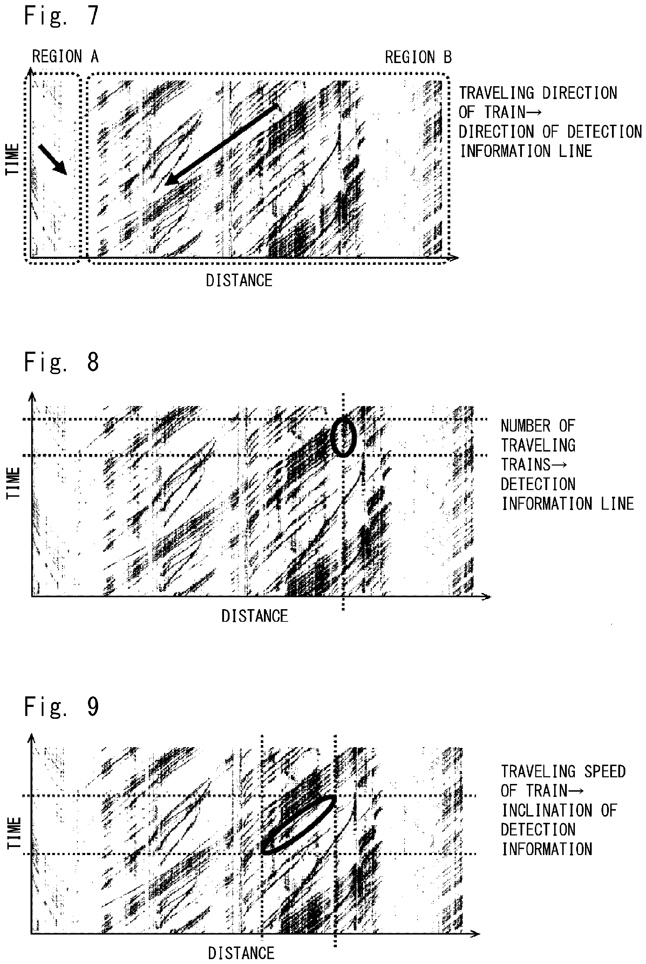

First, a method B1 of detecting a traveling state of a train on the railroad 10 will be described with reference to Figs. 7 to 11. Figs. 7 to 11 are diagrams illustrating one example of a pattern according to a traveling state of a train on the railroad 10.

The detection unit 332 detects a pattern according to a traveling state of a train on the railroad 10, based on a processing result by the fiber sensing unit 331. Specifically, a pattern according to a traveling state of a train on the railroad 10 is detected as illustrated in Figs. 7 to 11.

A pattern according to a traveling state of a train on the railroad 10 illustrated in Figs. 7 to 11 will be described below in detail. Note that a pattern itself is similar in Figs. 7 to 11.

In Figs. 7 to 11, a horizontal axis indicates a distance from the fiber sensing unit 331, and a vertical axis indicates a lapse of time. When a train travels and vibration of the train is detected by the fiber sensing unit 331, travel of the train is represented by a line on a graph. For example, travel of a train for a lapse of time is represented by one diagonal line on the graph. Hereinafter, the line is referred to as a "detection information line". A traveling direction of a train, a traveling speed, acceleration/deceleration, the number of traveling trains, a traveling interval, and the like can be detected based on a detection information line.

For example, as illustrated in Fig. 7, a traveling direction of a train can be detected based on a direction of a detection information line. In the example in Fig. 7, a train located in a region A and a train located in a region B have different traveling directions.

Further, as illustrated in Fig. 8, the number of traveling trains can be detected based on the number of detection information lines in a circled region.

Further, as illustrated in Fig. 9, a traveling speed of a train can be detected based on an inclination of a detection information line in a circled region.

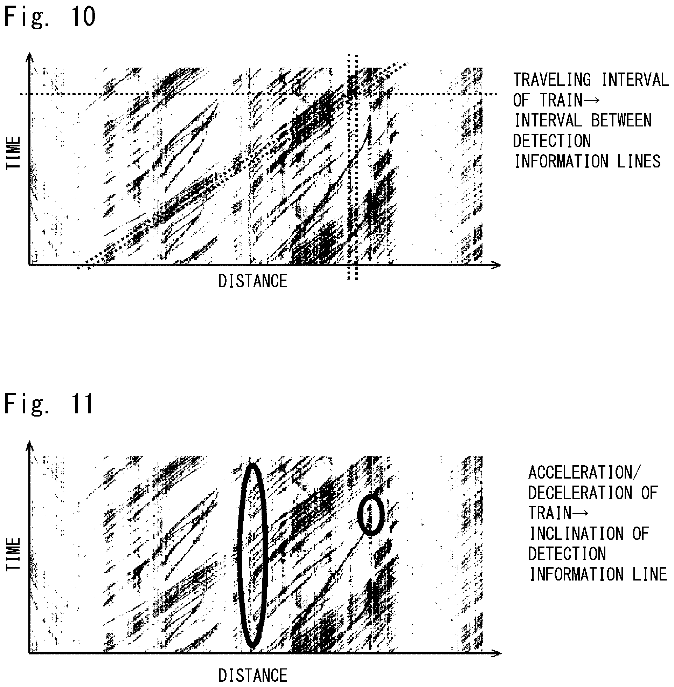

Further, as illustrated in Fig. 10, a traveling interval of a train can be detected based on an interval between a plurality of detection information lines being diagonally represented.

Further, as illustrated in Fig. 11, acceleration/deceleration of a train can be detected based on an inclination of a detection information line in a circled region.

In this way, the pattern illustrated in Figs. 7 to 11 becomes a dynamic pattern according to a traveling state of a train on the railroad 10.

Thus, when the detection unit 332 detects a traveling state of a train on the railroad 10, the detection unit 332 first detects a pattern according to the traveling state of the train on the railroad 10 as illustrated in Figs. 7 to 11. Next, the detection unit 332 detects the traveling state of the train on the railroad 10 by the method described in Figs. 7 to 11. Further, the detection unit 332 may detect a traveling state of a plurality of trains on the railroad 10 by the method described in Figs. 7 to 11.

### (B2) Method B2

Next, a method B2 of detecting a traveling state of a train on the railroad 10 will be described.

In the present method B2, the detection unit 332 holds a correspondence table in which a pattern according to a traveling state of a train on the railroad 10 and the traveling state of the train on the railroad 10 are associated with each other. Thus, when the detection unit 332 detects a traveling state of a train on the railroad 10, the detection unit 332 first detects a pattern according to the traveling state of the train on the railroad 10. Next, the detection unit 332 determines a traveling state of a train on the railroad 10 being associated with the pattern according to the traveling state of the train on the railroad 10 acquired above by using the correspondence table described above.

### (B3) Method B3

Next, a method B3 of detecting a traveling state of a train on the railroad 10 will be described.

In the present method B3, the detection unit 332 performs machine training (for example, deep training and the like) on a pattern according to a traveling state of a train on the railroad 10, and detects a traveling state of a train on the railroad 10 by using a training result (initial training model) of the machine training.

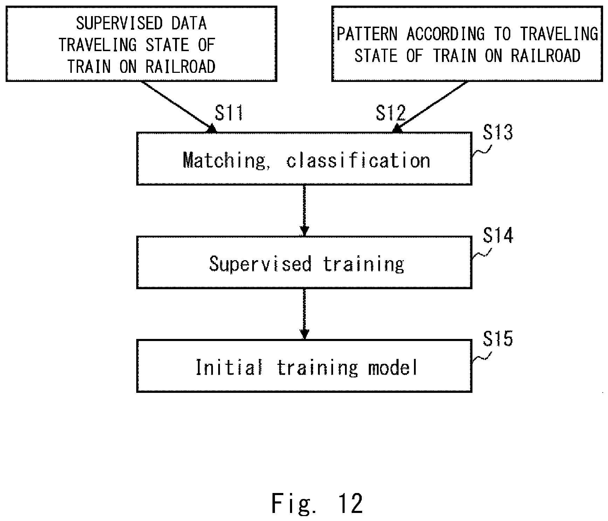

First, a method of machine training in the present method B3 will be described with reference to Fig. 12.

As illustrated in Fig. 12, the detection unit 332 inputs supervised data indicating a traveling state of a train on the railroad 10, and a pattern according to the traveling state of the train on the railroad 10 (steps S11 and S12).

Next, the detection unit 332 performs matching and classification on both (step S13), and performs supervised training (step S14). In this way, an initial training model is acquired (step S15). The initial training model is a model from which a traveling state of a train is output when a pattern according to the traveling state of the train on the railroad 10 is input.

Next, a method of detecting a traveling state of a train on the railroad 10 in the present method B3 will be described.

When the detection unit 332 detects a traveling state of a train on the railroad 10, the detection unit 332 first detects a pattern according to the traveling state of the train on the railroad 10. Next, the detection unit 332 inputs the pattern to an initial training model. In this way, the detection unit 332 acquires the traveling state of the train as an output result of the initial training model.

Next, a method of detecting an abnormal state of a train on the railroad 10 in the detection unit 332 will be described below.

### (C1) Method C1

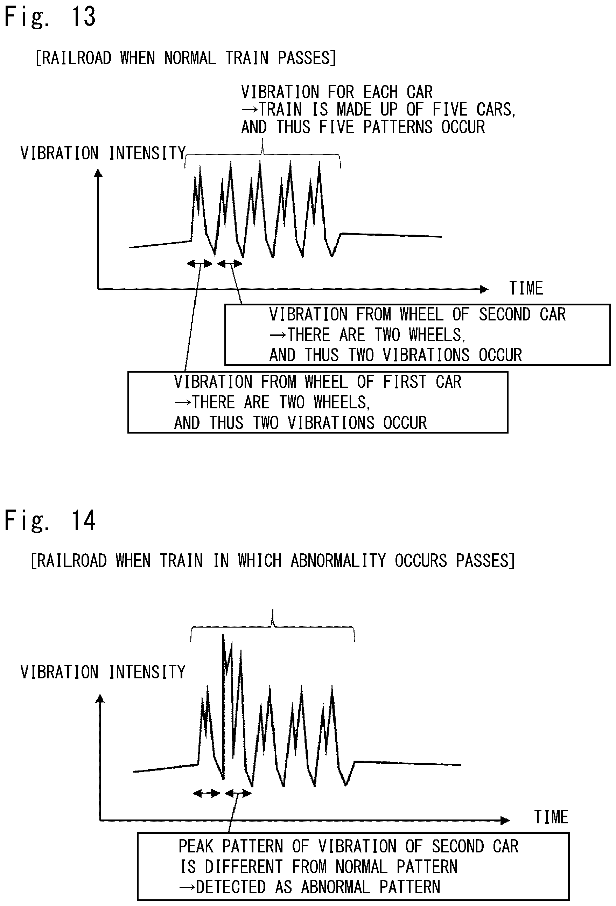

First, a method C1 of detecting an abnormal state of a train on the railroad 10 will be described with reference to Figs. 13 and 14. Figs. 13 and 14 illustrate vibration data (a horizontal axis is time and a vertical axis is vibration intensity) of the railroad 10 when a train passes through a specific location on the railroad 10. Further, Fig. 13 illustrates vibration data of the railroad 10 when a normal train passes, and Fig. 14 illustrates vibration data of the railroad 10 when a train in which an abnormality such as deterioration occurs due to a lapse of time passes. Note that Figs. 13 and 14 illustrate vibration data when a train is made up of five cars and two wheels are disposed on each of the cars along a movement direction of the train.

A pattern of vibration normally occurs in the railroad 10 for each wheel (axle) of a car of a train. The pattern of vibration occurring from the wheel becomes a dynamic pattern that varies between a normal train and a train in which an abnormality occurs.

As illustrated in Fig. 13, a train is made up of five cars, and thus five vibration patterns for each car occur (among the five vibration patterns in Fig. 13, a vibration pattern located farthest to the left is a vibration pattern of a first car, and a vibration pattern located farthest to the right is a vibration pattern of a fifth car). Further, two vibrations for each wheel occur in each car.

Herein, in comparison between Figs. 13 and 14, peak patterns of vibrations of second cars are different from each other, and a peak of the vibration is greater in Fig. 14. Thus, the peak pattern of the vibration of the second car illustrated in Fig. 14 is detected as an abnormal pattern.

Thus, when the detection unit 332 detects an abnormal state of a train on the railroad 10, the detection unit 332 first detects vibration data (for example, Figs. 13 and 14) of the railroad 10 when the train passes. Next, the detection unit 332 detects the abnormal state of the train on the railroad 10, based on a peak pattern of vibration in the vibration data of the railroad 10.

### (C2) Method C2

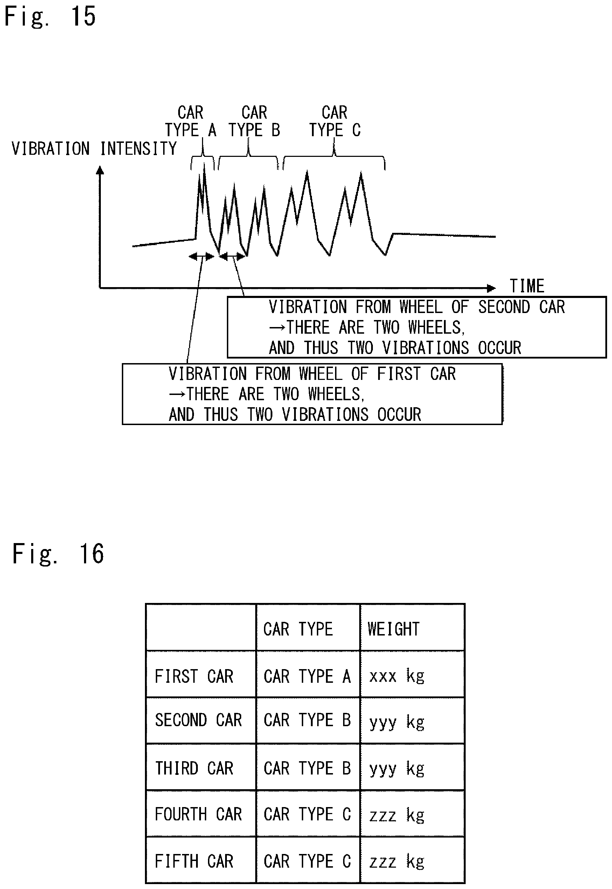

Next, a method C2 of detecting an abnormal state of a train on the railroad 10 will be described with reference to Figs. 15 and 16. Fig. 15 illustrates vibration data (a horizontal axis is time and a vertical axis is vibration intensity) of the railroad 10 when a train passes through a specific location on the railroad 10, and Fig. 16 illustrates train information about a train passing through the railroad 10.

There is a case where vibration varies depending on a car type and weight of a car of a train. In other words, there is a case where a pattern of vibration occurring from a wheel of a car becomes a dynamic pattern that varies according to a car type and weight of the car.

Thus, the detection unit 332 previously stores, for each train, train information (see Fig. 16) about the train, and also previously stores vibration data (Fig. 15) when the train passes through a specific location on the railroad 10. Note that the train information includes information about a car type and weight for each car of a train. Further, the weight may not only be weight of a car itself and may also be weight in consideration of the number of passengers.

Thus, when the detection unit 332 detects an abnormal state of a train on the railroad 10, the detection unit 332 first detects vibration data (for example, Fig. 15) of the railroad 10 when the train passes. Next, the detection unit 332 compares the detected vibration data with previously stored vibration data being expected for the train, and detects an abnormal state of the train on the railroad 10, based on whether there is a car deviated from the previously stored vibration data. Note that, as described later, the detection unit 332 may perform machine training on vibration data expected for a train, and detect an abnormal state of the train on the railroad 10 by using a training result (initial training model) of the machine training.

### (C3) Method C3

Next, a method C3 of detecting an abnormal state of a train on the railroad 10 will be described.

In the present method C3, the detection unit 332 holds a correspondence table in which a pattern according to a state of a train on the railroad 10 and the state of the train on the railroad 10 are associated with each other. Thus, when the detection unit 332 detects an abnormal state of a train on the railroad 10, the detection unit 332 first detects a pattern according to a state of the train on the railroad 10. Next, the detection unit 332 determines an abnormal state of the train on the railroad 10 being associated with the pattern according to the state of the train on the railroad 10 acquired above by using the correspondence table described above.

### (C4) Method C4

Next, a method C4 of detecting an abnormal state of a train on the railroad 10 will be described.

In the present method C4, the detection unit 332 performs machine training (for example, deep training and the like) on a pattern according to a state of a train on the railroad 10, and detects an abnormal state of the train on the railroad 10 by using a training result (initial training model) of the machine training.

The detection unit 332 performs machine training on a pattern according to a state of a train on the railroad 10, and previously acquires an initial training model as a training result of the machine training.

When the detection unit 332 detects an abnormal state of a train on the railroad 10, the detection unit 332 first detects a pattern according to a state of the train on the railroad 10. Next, the detection unit 332 inputs the pattern to the initial training model. In this way, the detection unit 332 acquires a state of the train on the railroad 10 as an output result of the initial training model, and thus the detection unit 332 determines whether the train is in an abnormal state.

Note that, in the methods A3, B3, and C4 described above, machine training is performed on a pattern according to a state of the railroad 10, a pattern according to a traveling state of a train, and a pattern according to a state of a train, and an abnormal state of the railroad 10, a traveling state of the train, and an abnormal state of the train are detected by using a training result of the machine training.

It may be difficult for an analysis by human to extract, from data, a characteristic for detecting an abnormal state of the railroad 10, a traveling state of a train, and an abnormal state of a train. In the present methods A3, B3, and C4, even when it is difficult for an analysis by human, an abnormal state of the railroad 10, a traveling state of a train, and an abnormal state of a train can be detected with high accuracy by constructing a training model from a large amount of patterns.

Further, in the machine training in the methods A3, B3, and C4 described above, a training model may be generated based on two or more pieces of supervised data in an initial state. Further, a newly detected pattern may be newly trained in the training model. At this time, a detail condition that detects an abnormal state of the railroad 10, a traveling state of a train, and an abnormal state of a train may be adjusted from a new training model.

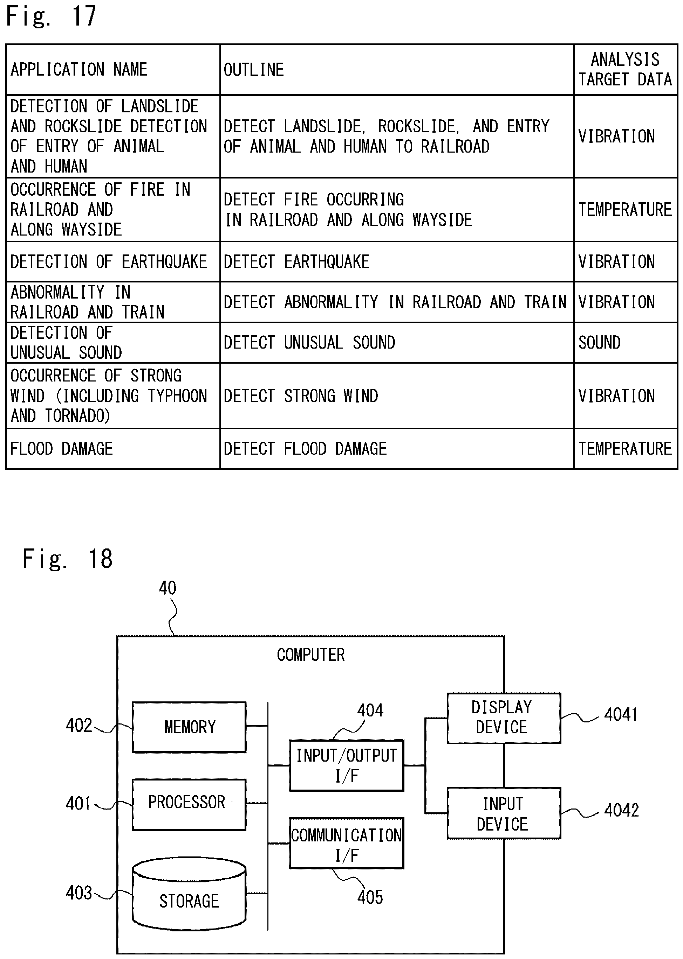

Next, an application that can be achieved based on an abnormal state of the railroad 10 and an abnormal state of a train on the railroad 10 being detected by the detection unit 332 will be described below with reference to Fig. 17.

For example, applications of (a) to (g) below can be achieved based on an abnormal state of the railroad 10 detected by the detection unit 332. Each of the applications will be described below.

### (a) Detection of Landslide and Rockslide, and Detection of Entry of Animal and Human

### Problem and Effect:

By remotely detecting occurrence of a landslide and a rockslide and entry of an animal, human, and the like in real time, an appropriate notification to a driver and action to a danger zone can be quickly performed.

Further, when entry of an animal, human, and the like is detected, a path followed by the animal, the human, and the like can also be detected.

### Operation Outline:

Vibration occurring due to a landslide, a rockslide, entry of an animal, human, and the like is monitored via the optical fiber cable 20 laid under the railroad 10, and an abnormality is determined by a pattern of the vibration.

Further, an aspect in which the optical fiber cable 20 is laid on a fence and a slope of a mountain may be adopted.

### (b) Occurrence of Fire in Railroad and along Wayside

### Problem and Effect:

By remotely monitoring a situation where a fire occurs in real time, quick fire fighting and prevention of a fire from progressing to a danger zone can be achieved.

### Operation Outline:

A surface temperature of the railroad 10 is monitored via the optical fiber cable 20 laid along the railroad 10, and, when the surface temperature is higher than or equal to a specific temperature, a fire is detected.

### (c) Detection of Earthquake

### Problem and Effect:

By monitoring a vibration situation in a wide area, an occurrence location of an earthquake and propagation of an earthquake can be recognized. A quick report of an earthquake and quick situation recognition can be achieved.

### Operation Outline:

Vibration of the optical fiber cable 20 buried in the railroad 10 is monitored, and determination of an earthquake is performed by a pattern of the vibration.

### (d) Abnormality in Railroad 10 and Train

### Problem and Effect:

By remotely detecting an abnormality such as damage to the railroad 10 and a train, the number of man-hours of a manual inspection can be reduced.

### Operation Outline:

Vibration when a train passes through the railroad 10 is monitored via the optical fiber cable 20, and determination of an abnormality such as damage to the railroad 10 and a train is performed by a pattern of the vibration.

### (e) Detection of Unusual Sound

### Problem and Effect:

By remotely detecting an abnormality in the railroad 10, a train, a surrounding building, and an environment around a railroad, the number of man-hours of a manual inspection can be reduced.

### Operation Outline:

Sound inside and outside the railroad 10 is monitored via the optical fiber cable 20, and a specific pattern is determined as an unusual sound.

### (f) Occurrence of Strong Wind (including Typhoon and Tornado)

### Problem and Effect:

By remotely detecting a wind speed of the entire wayside of the railroad 10, an advance of a train to a danger zone can be avoided.

### Operation Outline:

A wind speed is monitored from vibration of the optical fiber cable 20 laid along an overhead wire above the railroad 10, and a wind speed exceeding a threshold value is determined as a strong wind.

### (g) Flood Damage

### Problem and Effect:

By remotely detecting a flood damage situation of a wayside of the railroad 10, an advance of a train to a danger zone can be avoided.

### Operation Outline:

A location in which a change in temperature significantly changes is determined from a temperature situation of the entire wayside of the railroad 10, and it is determined that flood damage occurs in the determined location.

Next, a hardware configuration of a computer 40 that achieves the railroad monitoring device 33 will be described below with reference to Fig. 18.

As illustrated in Fig. 18, the computer 40 includes a processor 401, a memory 402, a storage 403, an input/output interface (input/output I/F) 404, a communication interface (communication I/F) 405, and the like. The processor 401, the memory 402, the storage 403, the input/output interface 404, and the communication interface 405 are connected to each other with a data transmission path for transmitting and receiving data to and from each other.

The processor 401 is an arithmetic processing unit such as a central processing unit (CPU) and a graphics processing unit (GPU), for example. The memory 402 is a memory such as a random access memory (RAM) and a read only memory (ROM), for example. The storage 403 is a storage device achieved by a hard disk drive (HDD), a solid state drive (SSD), or a memory card, for example. Further, the storage 403 may be a memory such as a RAM and a ROM.

The storage 403 stores a program that achieves a function of the fiber sensing unit 331 and the detection unit 332 included in the railroad monitoring device 33. The processor 401 achieves a function of each of the fiber sensing unit 331 and the detection unit 332 by executing each program. Herein, when the processor 401 executes each program described above, the processor 401 may read and then execute the program on the memory 402, or may execute the program without reading the program on the memory 402. Further, the memory 402 and the storage 403 also have a function of storing information and data held by the fiber sensing unit 331 and the detection unit 332.

Further, the program described above is stored by using a non-transitory computer readable medium of various types, and can be supplied to a computer (including the computer 40). The non-transitory computer readable medium includes a tangible storage medium of various types. Examples of the non-transitory computer readable medium include a magnetic recording medium (for example, a flexible disk, a magnetic tape, and a hard disk drive), a magneto-optical recording medium (for example, a magneto-optical disk), a compact discread only memory (CD-ROM), a CD-recordable (CD-R), a CD-rewritable (CD-R/W), and a semiconductor memory (for example, a mask ROM, a programmable ROM (PROM), an erasable PROM (EPROM), a flash ROM, and a random access memory (RAM)). Further, a program may be supplied to a computer by a transitory computer readable medium of various types. Examples of the transitory computer readable medium include an electric signal, an optical signal, and an electromagnetic wave. The transitory computer readable medium can supply a program to a computer via a wired communication path such as an electric wire and an optical fiber, or a wireless communication path.

The input/output interface 404 is connected to a display device 4041, an input device 4042, and the like. The display device 4041 is a device that displays a screen associated with drawing data processed by the processor 401, such as a liquid crystal display (LCD) and a cathode ray tube (CRT). The input device 4042 is a device that receives an operation input of an operator, and is, for example, a keyboard, a mouse, a touch sensor, and the like. The display device 4041 and the input device 4042 may be integrated and be achieved as a touch panel. Note that the computer 40 may be configured in such a way as to also include a sensor (not illustrated) including a distributed acoustic sensor, a distributed vibration sensor, and a distributed temperature sensor, and the like, and include the sensor being connected to the input/output interface 404.

The communication interface 405 transmits and receives data to and from an external device. For example, the communication interface 405 communicates with an external device via a wired communication path or a wireless communication path.

### <Operation of Example Embodiment>

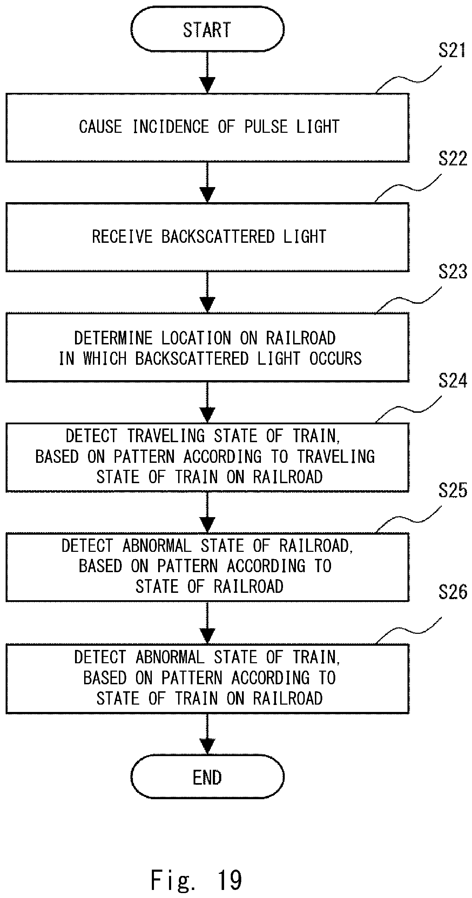

An operation of the railroad monitoring system according to the present example embodiment will be described below. Herein, an operation flow of the railroad monitoring system according to the present example embodiment will be described with reference to Fig. 19.

As illustrated in Fig. 19, first, the fiber sensing unit 331 causes pulse light to be incident on at least one communication optical fiber included in the optical fiber cable 20 (step S21).

Next, the fiber sensing unit 331 receives backscattered light from the same communication optical fiber as the communication optical fiber on which the pulse light is incident (step S22).

Next, the fiber sensing unit 331 determines a location on the railroad 10 in which the backscattered light received in step S22 occurs (step S23). At this time, the fiber sensing unit 331 may determine, by using the above-described method based on a time difference, the location in which the backscattered light occurs. Furthermore, the fiber sensing unit 331 detects a state of vibration, a state of temperature, a state of sound, and the like in the determined location on the railroad 10.

Next, the detection unit 332 detects a pattern according to a traveling state of a train on the railroad 10, based on the backscattered light received in step S22. More specifically, the pattern is detected based on a processing result of the backscattered light by the fiber sensing unit 331. Moreover, the detection unit 332 detects the traveling state of the train on the railroad 10, based on the detected pattern (step S24). At this time, the detection unit 332 may detect the traveling state of the train on the railroad 10 by using any method of the above-described methods B1 to B3.

Next, the detection unit 332 detects a pattern according to a state of the location on the railroad 10 determined in step S23, based on the backscattered light received in step S22. More specifically, the pattern is detected based on a processing result of the backscattered light by the fiber sensing unit 331. Moreover, the detection unit 332 detects an abnormal state of the location on the railroad 10 determined in step S23, based on the detected pattern (step S25). At this time, the detection unit 332 may detect the abnormal state by using any method of the above-described methods A1 to A3.

Subsequently, the detection unit 332 detects a pattern according to a state of a train passing through the location on the railroad 10 determined in step S23, based on the backscattered light received in step S22. More specifically, the pattern is detected based on a processing result of the backscattered light by the fiber sensing unit 331. Moreover, the detection unit 332 detects an abnormal state of the train passing through the location on the railroad 10 determined in step S23, based on the detected pattern (step S26). At this time, the detection unit 332 may detect the abnormal state by using any method of the above-described methods C1 to C4.

Note that, in Fig. 19, each time backscattered light is received in step S22, the processing in steps S23 to S26 may be performed. Alternatively, after a plurality of beams of backscattered light are received in step S22, the processing in steps S23 to S26 may be performed for each beam of the backscattered light. Alternatively, after a plurality of beams of backscattered light are received in steps S22 and S23 and each occurrence location is determined, the processing in steps S24 and S26 may be performed.

### <Effect of Example Embodiment>

The present example embodiment as described above receives backscattered light (an optical signal) from at least one communication optical fiber included in the optical fiber cable 20, detects a pattern according to a state of the railroad 10, based on the received backscattered light, and detects an abnormal state of the railroad 10, based on the detected pattern. In this way, for example, the present example embodiment detects an abnormal state of the railroad 10 by dynamically performing a pattern analysis (for example, a shift of a change in intensity of vibration and the like) on a change in vibration occurring in the railroad 10. Thus, an abnormal state of the railroad 10 can be detected with high accuracy.

Further, the present example embodiment detects a pattern according to a traveling state of a train on the railroad 10, based on received backscattered light, and detects the traveling state of the train on the railroad 10, based on the detected pattern. In this way, for example, the present example embodiment detects a traveling state of a train on the railroad 10 by dynamically performing a pattern analysis on a change in vibration occurring in the railroad 10, similarly to detection of an abnormal state of the railroad 10. Thus, a traveling state of a train on the railroad 10 can be detected with high accuracy.

Further, the present example embodiment detects a pattern according to a state of a train on the railroad 10, based on received backscattered light, and detects an abnormal state of the train on the railroad 10, based on the detected pattern. In this way, for example, the present example embodiment detects an abnormal state of a train on the railroad 10 by dynamically performing a pattern analysis on a change in vibration occurring in the railroad 10, similarly to detection of an abnormal state of the railroad 10. Thus, an abnormal state of a train on the railroad 10 can be detected with high accuracy.

Further, according to the present example embodiment, an existing communication optical fiber may be used for detecting an abnormal state of the railroad 10 and a traveling state of a train. Therefore, since a special structure for detecting an abnormal state of the railroad 10 and a traveling state of a train is not needed, a railroad monitoring system can be constructed at low cost.

Further, according to the present example embodiment, since an abnormal state of a plurality of railroads 10 can be remotely detected all at once by using an existing communication optical fiber, state recognition of the railroad 10 can be facilitated, and a cost for state recognition of the railroad 10 can also be reduced.

Further, the present example embodiment uses an optical fiber sensing technique using an optical fiber as a sensor. Thus, advantages in such a way that there is no influence of electromagnetic noise, supply of power to a sensor is unnecessary, an environment resistance is excellent, and maintenance is facilitated can be acquired.

### <Other Example Embodiment>

Note that it is assumed that the detection unit 332 may hold an abnormal state of the railroad 10 detected above for each location on the railroad 10, and detect the abnormal state in the location periodically (for example, every year), and thus detect a state change over time in abnormal state in the location.

Further, the detection unit 332 may detect a sign of an abnormality or damage in a location on the railroad 10, based on a state change over time in abnormal state in the location.

Further, an actual abnormal level may be determined by actually disassembling, by an analyzer, a portion in a location on the railroad 10 detected as abnormal by the detection unit 332. At this time, when there is a difference between an abnormal level detected by the detection unit 332 and the abnormal level determined by the analyzer, the difference may be fed back to the detection unit 332. In this case, the detection unit 332 will detect an abnormal state of the railroad 10 in such a way as to set an abnormal level closer to an actual abnormal level, and thus detection accuracy can be improved.

Further, the detection unit 332 may foresee a collision between trains, based on a location of each train, a traveling speed, a degree of acceleration/deceleration, and the like as a traveling state of a train on the railroad 10.

Further, when machine training is performed on a pattern according to a state of the railroad 10 by the method A3 described above in the detection unit 332, it is conceivable that a state of the railroad 10 varies by region. For example, it is conceivable that a state varies between a region with a mild climate and a region with a cold climate. When machine training is performed a pattern according to a traveling state of a train on the railroad 10 by the method B3 described above, it is conceivable that a traveling state of a train varies by region. Thus, the detection unit 332 may perform machine training by using supervised data according to a region for each region.

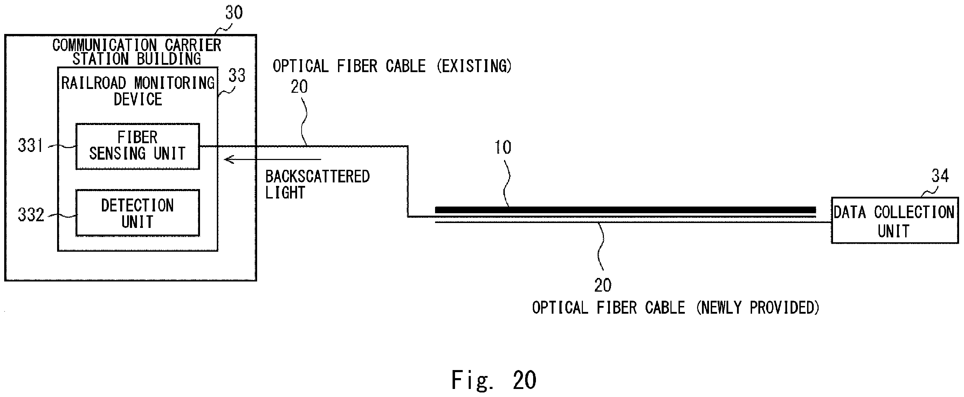

Further, in the example embodiment described above, it is assumed that an existing optical fiber cable 20 is used, but, as illustrated in Fig. 20, an optical fiber cable 20 may be newly provided, and a data collection unit 34 may be connected to the newly provided optical fiber cable 20. The data collection unit 34 also collects data of a pattern (for example, sound, temperature, vibration, and the like) of the railroad 10, and transmits the collected data to the detection unit 332. At this time, transmission of data from the data collection unit 34 to the detection unit 332 may be performed via the optical fiber cable 20, and may be performed via a radio being separately provided. The detection unit 332 detects an abnormal state of the railroad 10 and a traveling state of a train, based on data collected by the data collection unit 34 and the fiber sensing unit 331. Thus, detection accuracy can be improved.

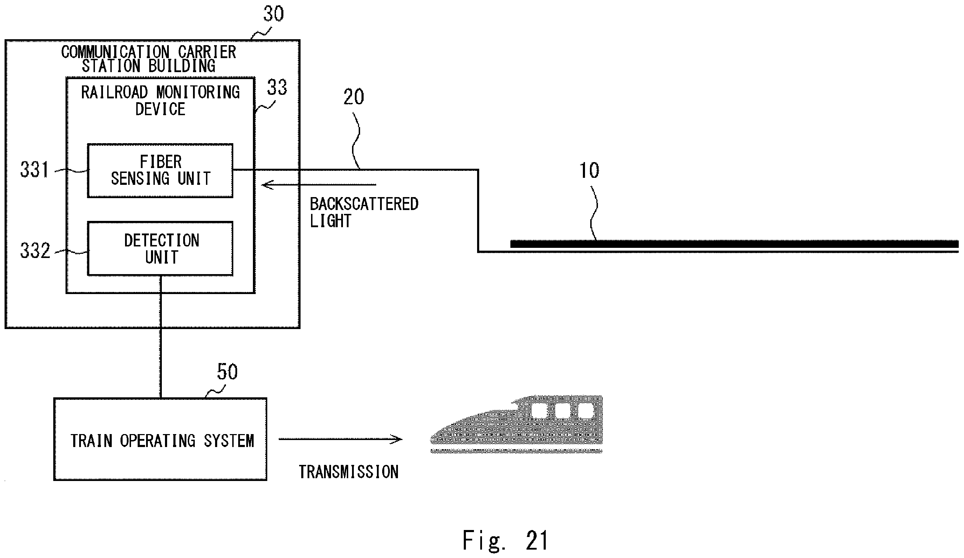

Further, as illustrated in Fig. 21, a train operating system 50 for managing an operation of a train on a railroad 10, based on a detection result by a railroad monitoring device 33, may be provided. The train operating system 50 is one example of a transmission unit. The train operating system 50 may transmit a train control signal for controlling travel of a train to a driver of the train, based on an abnormal state of the railroad 10 and the train and a traveling state of the train on the railroad 10, via a highway radio, an information board on the railroad 10, the Internet, an application, and the like. For example, when an abnormal state of the railroad 10 and a train is detected or when a collision between trains is foreseen, it is conceivable that the train operating system 50 transmits a train control signal for instructing an emergency stop of a train to a driver of a corresponding train. Further, the detection unit 50 may present, to a system administrator and the like, an abnormal state of the railroad 10 and a train, a state change over time in abnormal state of the railroad 10 and a train, a sign of an abnormality or damage in the railroad 10 and a train, and the like. Further, the train operating system 50 may calculate a maintenance period of the railroad 10 and a repair period of a train, based on a detection result by the railroad monitoring device 33, and present the maintenance period of the railroad 10 to a system administrator and the like. Further, the train operating system 50 is provided outside a communication carrier station building 30, but a part of a function (for example, a function of a transmission unit and the like) may be provided inside the communication carrier station building 30. Further, when the train operating system 50 is provided outside the communication carrier station building 30, the railroad 10 connected to each of the plurality of communication carrier station buildings 30 with the optical fiber cable 20 may be monitored by one train operating system 50 in a centralized manner.

Further, a fiber sensing unit 331 and a detection unit 332 of the railroad monitoring device 33 may be provided separately. For example, only the fiber sensing unit 331 may be provided inside the communication carrier station building 30, and the railroad monitoring device 33 including the detection unit 332 may be provided outside the communication carrier station building 30.

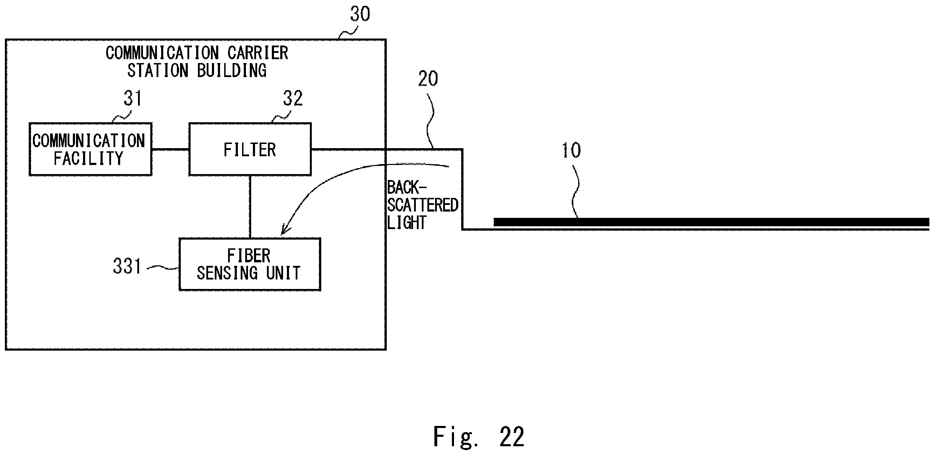

Further, in the example embodiment described above, only one fiber sensing unit 331 is provided and also occupies the optical fiber cable 20, which is not limited thereto. Herein, an arrangement of a fiber sensing unit 331 in a railroad monitoring system according to another example embodiment will be described with reference to Figs. 22 to 25. Note that illustration of a detection unit 332 is omitted from Figs. 22 to 25.

In the example in Fig. 22, the fiber sensing unit 331 shares an optical fiber cable 20 with an existing communication facility 31. Further, since the fiber sensing unit331 and the existing communication facility 31 share the optical fiber cable 20, a filter 32 for signal separation is provided.

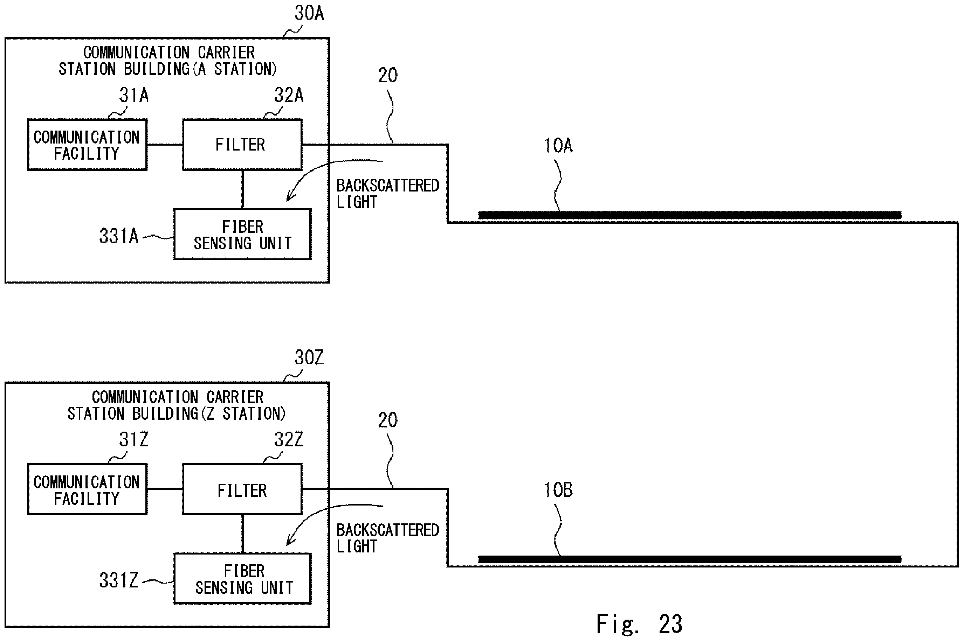

In the example in Fig. 23, one fiber sensing unit 331 is provided in each of a plurality of communication carrier station buildings 30 (two communication carrier station buildings 30A and 30Z in Fig. 23). Specifically, fiber sensing units 331A and 331Z are provided inside the communication carrier station buildings 30A and 30Z, respectively. Note that, in the example in Fig. 23, a railroad 10A is connected to the communication carrier station building 30A with an optical fiber cable 20, a railroad 10B is connected to the communication carrier station building 30Z with the optical fiber cable 20, and the railroads 10A and 10B are connected to each other with the optical fiber cable 20. The communication facilities 31A and 31Z are associated with the communication facility 31, and filters 32A and 32Z are associated with the filter 32.

In the example in Fig. 23, both of the fiber sensing units 331A and 331Z monitor the railroads 10A and 10B.

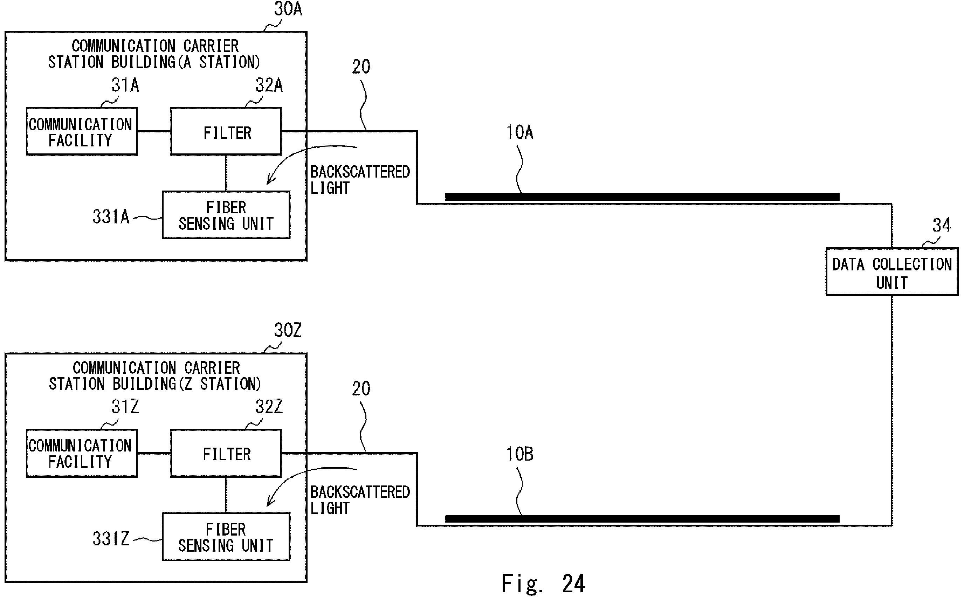

In the example in Fig. 24, a data collection unit 34 is provided near a railroad 10A as compared to Fig. 23. Herein, only one data collection unit 34 is provided for the railroad 10A and a railroad 10B, but one or more data collection units 34 may be provided on the assumption that one is provided for a predetermined number of railroads 10 or one is provided for a predetermined railroad length of the railroad 10.

In the example in Fig. 24, each data collection unit 34 collects data of a pattern (for example, sound, temperature, vibration, and the like) of the corresponding railroad 10, and the detection unit 332 puts the data collected by each data collection unit 34 together. At this time, transmission of data from each data collection unit 34 to the detection unit 332 may be performed via the optical fiber cable 20, and may be performed via a radio being separately provided. For the railroad 10 having the data collected by the data collection unit 34, the detection unit 332 detects an abnormal state and a traveling state of a train, based on the data.

Thus, a monitor section of one fiber sensing unit 331 is shortened, and the number and a railroad length of the railroads 10 to be monitored are reduced. Since a monitor section of the fiber sensing unit 331 is short, a transmission distance of pulse light and backscattered light is short, and thus a fiber loss is reduced. In this way, a signal-to-noise ratio (S/N ratio) of backscattered light to be received can be improved, and monitor accuracy can be improved. Further, the number and a railroad length of the railroads 10 to be monitored of the fiber sensing unit 331 are reduced, and thus a monitor cycle can be improved.

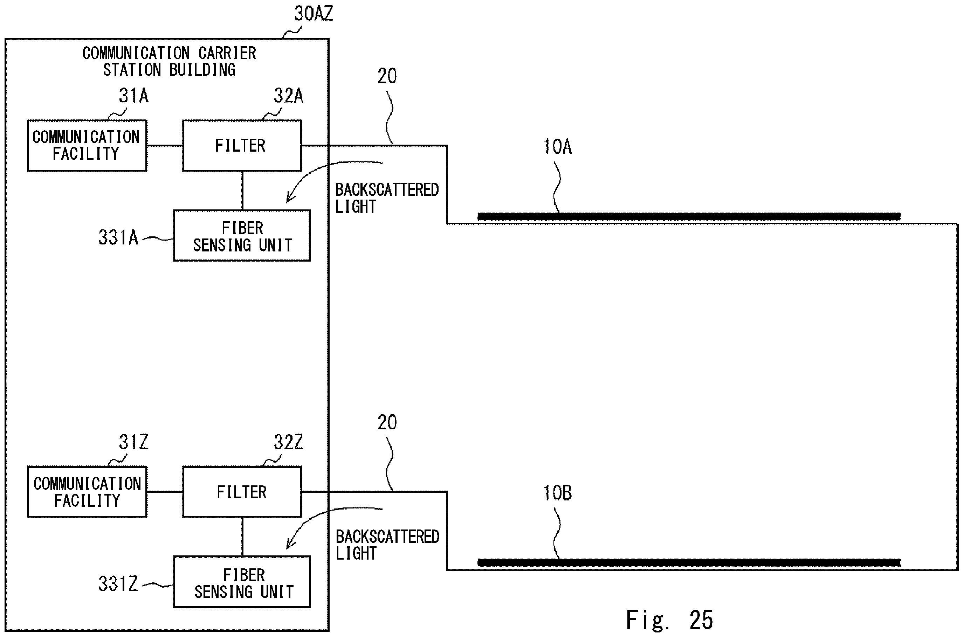

In the example in Fig. 25, a plurality of fiber sensing units 331 (two fiber sensing units 331A and 331Z in Fig. 25) are provided in one communication carrier station building 30AZ. Note that, in the example in Fig. 25, a railroad 10A is connected to the fiber sensing unit 331A with an optical fiber cable 20, a railroad 10B is connected to the fiber sensing unit 331Z with the optical fiber cable 20, and the railroads 10A and 10B are connected to each other with the optical fiber cable 20. Communication facilities 31A and 31Z are associated with the communication facility 31, and filters 32A and 32Z are associated with the filter 32.

In the example in Fig. 25, both of the fiber sensing units 331A and 331Z monitor the railroads 10A and 10B. However, the fiber sensing unit 331A causes pulse light to be incident in a clockwise direction and monitors the railroads 10, and the fiber sensing unit 331Z causes pulse light to be incident in a counterclockwise direction and monitors the railroads 10.

Note that, when the plurality of fiber sensing units 331 are provided as in Figs. 23 to 25, one railroad monitoring device 33 including the detection unit 332 may be provided for the plurality of fiber sensing units 331. Then, a state of the railroad 10 connected to each of the plurality of fiber sensing units 331 with the optical fiber cable 20 may be detected by one railroad monitoring device 33 in a centralized manner. In this case, the railroad monitoring device 33 may be provided inside any of the communication carrier station buildings 30, and may be provided outside the communication carrier station buildings 30.

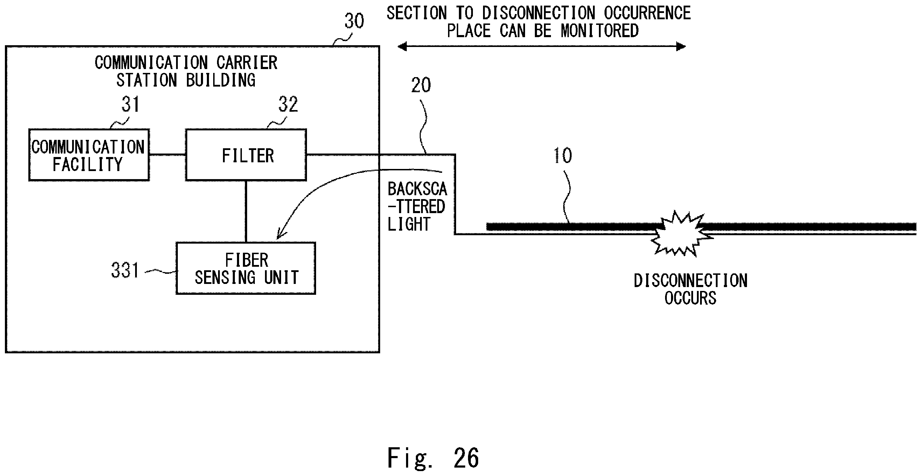

Further, there is a possibility that the optical fiber cable 20 laid on the railroad 10 may be disconnected. Thus, an operation of the fiber sensing unit 331 during disconnection of the optical fiber cable 20 in the railroad monitoring system according to the another example embodiment will be described with reference to Figs. 26 to 28. Note that illustration of the detection unit 332 is omitted from Figs. 26 to 28.

The example in Fig. 26 is an example in which the optical fiber cable 20 of the railroad 10 is disconnected in the configuration in Fig. 22. Even when the optical fiber cable 20 is disconnected, the fiber sensing unit 331 continues to cause pulse light to be incident on the optical fiber cable 20. In this way, the communication carrier station building 30 can continue to monitor a section to a disconnected location.

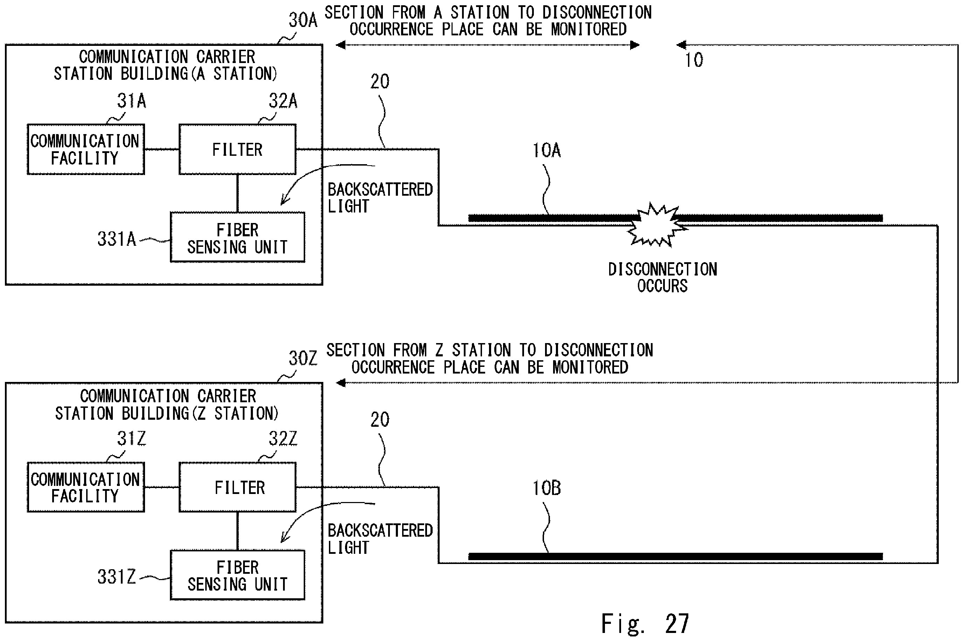

The example in Fig. 27 is an example in which the optical fiber cable 20 of the railroad 10A is disconnected in the configuration in Fig. 23. Even when the optical fiber cable 20 is disconnected, the fiber sensing units 331A and 331Z continue to cause pulse light to be incident on the optical fiber cable 20. At this time, the railroad 10 is always connected to two or more communication carrier station buildings 30 (two communication carrier station buildings 30A and 30Z in Fig. 27). Thus, the communication carrier station buildings 30A and 30Z perform monitoring in both directions, and thus a redundant configuration that can continuously monitor the entire section can be constructed in a single obstacle.

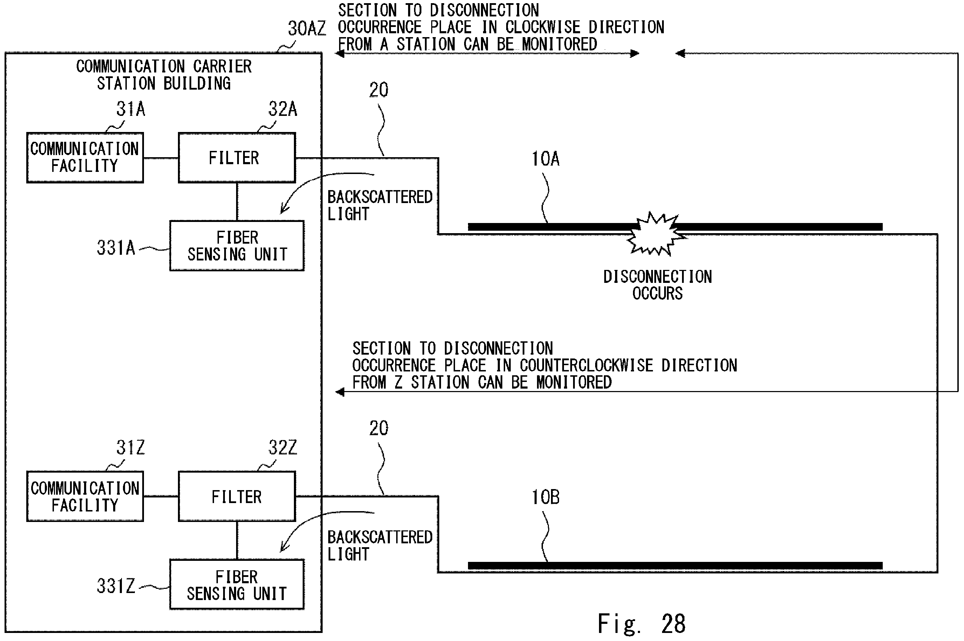

The example in Fig. 28 is an example in which the optical fiber cable 20 of the railroad 10A is disconnected in the configuration in Fig. 25. Even when the optical fiber cable 20 is disconnected, the fiber sensing units 331A and 331Z continue to cause pulse light to be incident on the optical fiber cable 20. At this time, in the example in Fig. 28, a ring configuration in which the optical fiber cable 20 is connected in a ring shape is constructed. Thus, monitoring is performed in both directions of the ring from one communication carrier station building 30AZ, and thus a redundant configuration that can continuously monitor the entire section can be constructed in a single obstacle.

Although the present disclosure has been described above with reference to the example embodiments, the present disclosure is not limited to the above-described example embodiments. Various modifications that can be understood by those skilled in the art can be made to the configuration and the details of the present disclosure within the scope of the present disclosure.

Furthermore, the whole or part of the embodiments disclosed above can be described as, but not limited to, the following supplementary notes.

### (Supplementary note 1)

A railroad monitoring system, comprising:
a cable including a communication optical fiber, being laid on a railroad;
a reception unit configured to receive an optical signal from at least one communication optical fiber included in the cable; and
a detection unit configured to detect a pattern according to a state of the railroad, based on the optical signal, and detect an abnormal state of the railroad, based on the detected pattern according to the state of the railroad

### (Supplementary note 2)

The railroad monitoring system according to Supplementary note 1, wherein
the reception unit determines a location on the railroad in which the optical signal is generated, based on the optical signal, and
the detection unit detects an abnormal state in the determined location on the railroad, based on the detected pattern according to the state of the railroad.

### (Supplementary note 3)

The railroad monitoring system according to Supplementary note 1 or 2, wherein the detection unit detects a pattern according to a traveling state of a train on the railroad, based on the optical signal, and detects a traveling state of a train on the railroad, based on the detected pattern according to the traveling state of the train on the railroad.

### (Supplementary note 4)

The railroad monitoring system according to Supplementary note 3, wherein the detection unit detects a pattern according to a state of a train on the railroad, based on the optical signal, and detects an abnormal state of a train on the railroad, based on the detected pattern according to the state of the train on the railroad.

### (Supplementary note 5)

The railroad monitoring system according to Supplementary note 4, further comprising a transmission unit configured to transmit a train control signal for controlling travel of a train to a driver of a train, based on the detected abnormal state of the railroad, a traveling state of a train on the railroad, and an abnormal state of a train on the railroad.

### (Supplementary note 6)

The railroad monitoring system according to Supplementary note 5, wherein, when an abnormal state of the railroad or a train is detected or when a collision between trains is foreseen as a traveling state of a train on the railroad, the transmission unit transmits the train control signal for instructing an emergency stop of a train to a driver of an associated train.

### (Supplementary note 7)

A railroad monitoring device, comprising:
a reception unit configured to receive an optical signal from at least one communication optical fiber included in a cable laid on a railroad; and
a detection unit configured to detect a pattern according to a state of the railroad, based on the optical signal, and detect an abnormal state of the railroad, based on the detected pattern according to the state of the railroad.

### (Supplementary note 8)

The railroad monitoring device according to Supplementary note 7, wherein
the reception unit determines a location on the railroad in which the optical signal is generated, based on the optical signal, and
the detection unit detects an abnormal state in the determined location on the railroad, based on the detected pattern according to the state of the railroad.

### (Supplementary note 9)

The railroad monitoring device according to Supplementary note 7 or 8, wherein the detection unit detects a pattern according to a traveling state of a train on the railroad, based on the optical signal, and detects a traveling state of a train on the railroad, based on the detected pattern according to the traveling state of the train on the railroad.

### (Supplementary note 10)

The railroad monitoring device according to Supplementary note 9, wherein the detection unit detects a pattern according to a state of a train on the railroad, based on the optical signal, and detects an abnormal state of a train on the railroad, based on the detected pattern according to the state of the train on the railroad.

### (Supplementary note 11)

A railroad monitoring method by a railroad monitoring device, the method comprising:
receiving an optical signal from at least one communication optical fiber included in a cable laid on a railroad; and
detecting a pattern according to a state of the railroad, based on the optical signal, and detecting an abnormal state of the railroad, based on the detected pattern according to the state of the railroad.

### (Supplementary note 12)

A non-transitory computer-readable medium that stores a program for causing a computer to execute:
a procedure of receiving an optical signal from at least one communication optical fiber included in a cable laid on a railroad; and
a procedure of detecting a pattern according to a state of the railroad, based on the optical signal, and detecting an abnormal state of the railroad, based on the detected pattern according to the state of the railroad.

This application is based upon and claims the benefit of priority from Japanese patent application No. 2018-226683, filed on December 3, 2018, the disclosure of which is incorporated herein in its entirety by reference.

### Reference Signs List

- 10, 10A, 10B: Railroad
- 20: Optical fiber cable
- 30, 30A, 30Z, 30AZ: Communication carrier station building
- 31, 31A, 31Z: Communication facility
- 32, 32A, 32Z: Filter
- 33: Railroad monitoring device
- 331, 331A, 331Z: Fiber sensing unit
- 332: Detection unit
- 34: Data collection unit
- 40: Computer
- 401: Processor
- 402: Memory
- 403: Storage
- 404: Input/output interface
- 4041: Display device
- 4042: Input device
- 405: Communication interface
- 50: Train operating system

## Claims

1. A railroad monitoring system, comprising:
a cable including a communication optical fiber, being laid on a railroad;
a reception unit configured to receive an optical signal from at least one communication optical fiber included in the cable; and
a detection unit configured to detect a pattern according to a state of the railroad, based on the optical signal, and detect an abnormal state of the railroad, based on the detected pattern according to the state of the railroad.

2. The railroad monitoring system according to Claim 1, wherein
the reception unit determines a location on the railroad in which the optical signal is generated, based on the optical signal, and
the detection unit detects an abnormal state in the determined location on the railroad, based on the detected pattern according to the state of the railroad.

3. The railroad monitoring system according to Claim 1 or 2, wherein the detection unit detects a pattern according to a traveling state of a train on the railroad, based on the optical signal, and detects a traveling state of a train on the railroad, based on the detected pattern according to the traveling state of the train on the railroad.

4. The railroad monitoring system according to Claim 3, wherein the detection unit detects a pattern according to a state of a train on the railroad, based on the optical signal, and detects an abnormal state of a train on the railroad, based on the detected pattern according to the state of the train on the railroad.

5. The railroad monitoring system according to Claim 4, further comprising a transmission unit configured to transmit a train control signal for controlling travel of a train to a driver of a train, based on the detected abnormal state of the railroad, a traveling state of a train on the railroad, and an abnormal state of a train on the railroad.

6. The railroad monitoring system according to Claim 5, wherein, when an abnormal state of the railroad or a train is detected or when a collision between trains is foreseen as a traveling state of a train on the railroad, the transmission unit transmits the train control signal for instructing an emergency stop of a train to a driver of an associated train.

7. A railroad monitoring device, comprising:
a reception unit configured to receive an optical signal from at least one communication optical fiber included in a cable laid on a railroad; and
a detection unit configured to detect a pattern according to a state of the railroad, based on the optical signal, and detect an abnormal state of the railroad, based on the detected pattern according to the state of the railroad.

8. The railroad monitoring device according to Claim 7, wherein
the reception unit determines a location on the railroad in which the optical signal is generated, based on the optical signal, and
the detection unit detects an abnormal state in the determined location on the railroad, based on the detected pattern according to the state of the railroad.

9. The railroad monitoring device according to Claim 7 or 8, wherein the detection unit detects a pattern according to a traveling state of a train on the railroad, based on the optical signal, and detects a traveling state of a train on the railroad, based on the detected pattern according to the traveling state of the train on the railroad.

10. The railroad monitoring device according to Claim 9, wherein the detection unit detects a pattern according to a state of a train on the railroad, based on the optical signal, and detects an abnormal state of a train on the railroad, based on the detected pattern according to the state of the train on the railroad.

11. A railroad monitoring method by a railroad monitoring device, the method comprising:
receiving an optical signal from at least one communication optical fiber included in a cable laid on a railroad; and
detecting a pattern according to a state of the railroad, based on the optical signal, and detecting an abnormal state of the railroad, based on the detected pattern according to the state of the railroad.

12. A non-transitory computer-readable medium that stores a program for causing a computer to execute:
a procedure of receiving an optical signal from at least one communication optical fiber included in a cable laid on a railroad; and
a procedure of detecting a pattern according to a state of the railroad, based on the optical signal, and detecting an abnormal state of the railroad, based on the detected pattern according to the state of the railroad.
